Europäisches Patentamt

European Patent Office

Office européen des brevets

(11) Publication number: **0 162 928**
**B1**

# EUROPEAN PATENT SPECIFICATION

(45) Date of publication of patent specification: **10.05.89**

(51) Int. Cl.⁴: **G 06 F 9/26,** G 06 F 9/28

(21) Application number: **84904161.1**

(22) Date of filing: **08.11.84**

(86) International application number:
**PCT/JP84/00534**

(87) International publication number:
**WO 85/02277 23.05.85 Gazette 85/12**

(54) MICROPROGRAM CONTROL METHOD.

(30) Priority: **11.11.83 JP 212015/83**

(43) Date of publication of application:
**04.12.85 Bulletin 85/49**

(45) Publication of the grant of the patent:
**10.05.89 Bulletin 89/19**

(84) Designated Contracting States:
**DE FR GB**

(56) References cited:
**EP-A-0 032 955**
**EP-A-0 073 004**
**EP-A-0 087 008**
**JP-A-55 023 565**
**US-A-4 337 510**

(73) Proprietor: **FUJITSU LIMITED**
**1015, Kamikodanaka Nakahara-ku**
**Kawasaki-shi Kanagawa 211 (JP)**

(72) Inventor: **KITAMURA, Toshiaki**
**24-62-2-1008, Tamagawa 2-chome**
**Ota-ku Tokyo 146 (JP)**
Inventor: **ONISHI, Katsumi**
**2-137, Shimoshingashi**
**Kawagoe-shi Saitama 356 (JP)**

(74) Representative: **Muir, Ian R. et al**
**HASELTINE LAKE & CO. Hazlitt House 28**
**Southampton Buildings Chancery Lane**
**London WC2A 1AT (GB)**

## Description

The present invention relates to a microprogram control system and particularly to a microprogram control system in a data processing unit having a pipeline control system.

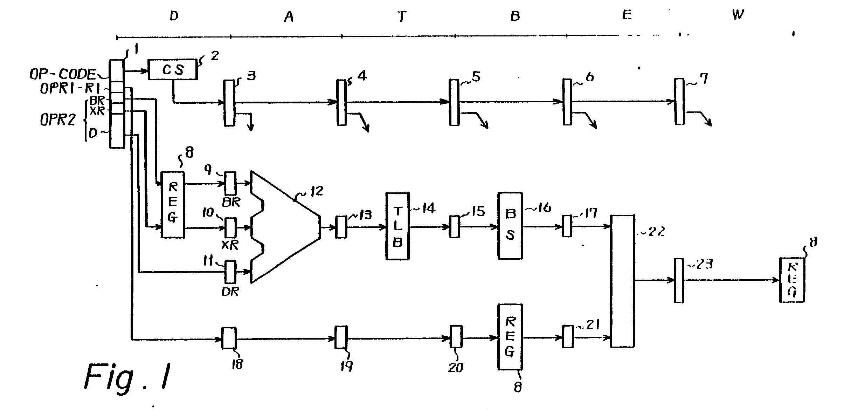

As shown in Fig. 1, for example, a prefetched instruction is executed by a pipeline processing part having respective stages D, A, T, B, E and W.

In Fig. 1, 1 is instruction word or instruction register; 2 is control memory storing microinstructions; 3 to 7 are microinstruction field registers giving instructions to the hardware in correspondence to stages D to W; 8 is a general purpose register group; 9 is a base register; 10 is an index register; 11 is a displacement register; 12 is an address calculating part; 13 is a logical address register; 14 is TLB (address translation buffer); 15 is an address buffer; 16 is a buffer memory; 17 is an operand register; 18 to 20 are operand buffer registers; 21 is an operand register; 22 is an operation unit; 23 is a result register. The same general purpose register group 8 is used in the three timing stages D, B and W, indicated in Fig. 1.

When an instruction 1 is supplied to the pipeline shown in Fig. 1, a microinstruction required for executing the relevant instruction 1 is read in stage D and is set in register 3 and values are set in registers 9, 10, 11 in order to calculate the address of the operand (operand 2—OPR2—in the Figure) which is required for execution of relevant instruction 1. The address of said operand is calculated by the set calculation part 12 in stage A and it is then set in the logic address register 13. TLB 14 and buffer memory 16 are indexed through stages T and B and a value of said operand 2 is set in register 17. At this time, a value of operand 1 (OPR1) is also set to the register 21. Under this condition, the specified operation is carried out by the operation unit 22 in stage E and the relevant operation result is set in general purpose register 8 in stage W.

Pipeline control is carried out as explained above, but processing corresponding to the respective stages is carried out by reading a microinstruction from the control memory 2 indicated in the Figure and executing the microinstruction.

Instructions are executed by processings in the pipeline processing part.

With recent increases in the amount of data required to be processed and with diversification of the kinds of data processing required, there is an increasing need to enhance the functions available, and thereby the number of available instructions tends also to increase. As a result, instructions having suboperation codes are increasing in number, and processing speed for reading desired microinstructions corresponding to such instructions having relevant suboperation codes has become a problem. Namely, there is a problem of cooperation with processings by said pipeline processing part. Moreover, in a data processing unit employing suboperations, a single microprogram storage means (said control memory 2) is provided with a field for storing branching data corresponding to a suboperation code. Thereby said control memory is accessed using an ordinary operation code and when it is sensed that an instruction involved has a suboperation code by means of the data read above, the control memory is accessed again using the suboperation code and the heading address of a microprogram corresponding to said instruction is obtained by data read as a result of this access.

Therefore, access to control memory has been carried out sequentially and excessive control memory access operation is required.

This problem can be solved by using addresses of such a length to include the whole of an operation code and suboperation code, even for instructions having no suboperation code, as addresses for making first access to the control memory. However, in this case, capacity of control memory is required to increase considerably, and this is not practical.

JP—A—55 23565 discloses a system using microprograms and providing for processing of "basic" instructions and also extended instructions. Whether or not an instruction is "basic" or extended is determined by detecting the basic (OP) part of the instruction. Depending on the determination made, decoders (look-up tables) are appropriately accessed to provide the address of a relevant microprogram in a ROM address register, for accessing a ROM holding the microprogram.

EP—A—0 032 955 discloses a system using microprograms and providing for processing of instructions with operation codes and, in some cases, suboperation codes.

The operation code of an instruction to be processed is used to access a first block of a first memory. The consequently read out first microinstruction is held in a microinstruction register. The suboperation code is used to access a second memory which outputs a plurality of index data items. In dependence upon information in the first microinstruction held in the microinstruction register, one of those data items is selected for use in providing in combination with address bits of a next address field of the first microinstruction an address to access the first memory again, at a block other than the first, to read out a next microinstruction corresponding to the instruction to be processed (including the sub-operand code part of the instruction).

It is an object of the present invention to provide a system for obtaining at a high speed the heading address of a microprogram of an instruction having a suboperation code, in a data processing unit which processes instructions having suboperation codes by microprogram control.

According to the present invention, this object can be attained by providing a microprogram control system in a data processing unit operable to process, under microprogram control, instruction having operation codes and, in some instructions, suboperation codes, comprising

a first control memory, storing microinstructions and accessible by the operation code of an instruction to be processed for generating an initial microinstruction of the microprogram associated with the instruction concerned, and

a second control memory, storing data for use in generating a heading address of a microprogram corresponding to the instruction to be processed when that instruction has a suboperation code, accessible by the suboperation code of the instruction concerned, simultaneously with access to the first control memory by the operation code of the instruction concerned, to read out a heading address data set, for use in specifying a set of heading addresses relating respectively to microprograms to which the accessing suboperation code could relate when associated with different operation codes,

selection means, for selecting, from the heading address data set, the heading address data appropriate for the operation code with which the suboperation code is in fact associated in the instruction concerned,

and address generating means operable to use the selected heading address data to provide the access address of the next microinstruction from the first control memory, in response to a control signal from the initial microinstruction when the instruction to be processed has a suboperation code characterized in that

the selection means comprise a detection circuit operable to convert the operation code of the instruction concerned into selection signals for a selector that is arranged to receive the read out heading address data set from the second control memory and to select therefrom, in dependence upon the operation code, the appropriate heading address data,

and the address generating means comprise an encoder, operable to encode the selection signals from the detection circuit for providing part of the access address of the first control memory, and a selector operable to combine said part of the access address with the selected heading address data from the second control memory to provide said access address of the next microinstruction.

Briefly, an embodiment of the present invention provides a control memory (hereinafter referred to as SUBOPCS) which stores data for generating the heading address of a microprogram corresponding to an instruction having a suboperation code, and access to control memory by the ordinary operation code is executed simultaneously with access to said SUBOPCS by the suboperation code, then data read from respective control memories is emitted to generate the heading address of said microprogram. The capacity of the SUBOPCS is within the range not giving problem on assignment of microinstruction.

Brief description of the drawings

Fig. 1 shows constitution of essential parts for executing instructions by pipeline processing.

Fig. 2 is a block diagram of an embodiment of the present invention.

Fig. 3 shows a detailed constitution of an address generating part in Fig. 2.

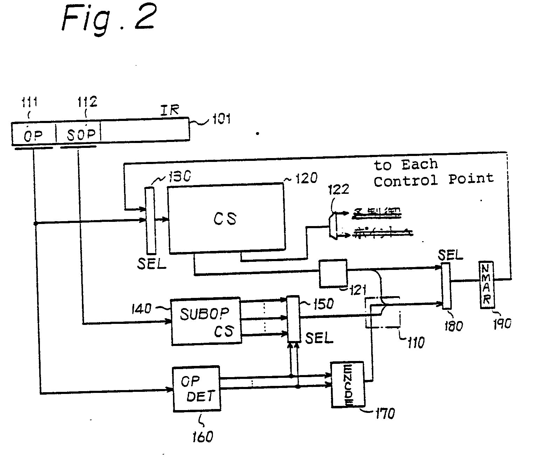

In Fig. 2, 101 is an instruction register (IR) (corresponding to 1 in Fig. 1), 111 is an operation code area (OP), 112 is a suboperation code area (SOP). 120 is a control memory (CS—corresponding to 2 in Fig. 1). A read microinstruction is decoded by a decoder (DEC) 122, a control signal for each control point is output and thereby the microaddress of a microinstruction to be executed next is generated by a next microaddress generating circuit 121 and a circuit 110, as required. 130 is a selector (SEL), 140 is a suboperation control memory (SUBOPCS), provided in accordance with the present invention, storing data for generating the heading address of a microprogram corresponding to an instruction having a suboperation code as explained above. 150 is a selector (SEL), 160 is a detector (OPDET) which detects an operation code of an instruction having a suboperation code from the data in the operation code part (OP) of the instruction register 1, 170 is an encoder (ENCDE), 180 is a selector (SEL), 190 is a next microaddress register (NMAR).

First, when an instruction is set in the instruction register (IR) 1, if the instruction does not have a suboperation code area (SOP), access is made to control memory (CS) through selector (SEL) 130 using the operation code area (OP) of instruction register (IR) 101 and thereby the heading microinstruction of a microprogram corresponding to the operation code area (OP) of the instruction can be obtained. The obtained microinstruction is decoded by the decoder (DEC) 122, and a control signal for each control point is output to execute said instruction.

The microinstruction next after the heading microinstruction can be obtained by setting the address generated by inputting next address field data of the microinstruction read from the control memory (CS) into the next microaddress register (NMAR) 190 through the selector (SEL) 180, and making access to the control memory (CS) 120 through the selector (SEL) 130.

When an instruction having a suboperation code (SOP) is set in the instruction register (IR) 101, access is made to the control memory (CS) 120 through the selector (SEL) 130 using the operation code area (OP) of the instruction in a first execution cycle of the instruction and simultaneously access is made to SUBOPCS 140 using the suboperation code area (SOP) of the instruction. Moreover, the operation code (OP) of the instruction is input to the detection circuit (OPDET) 160 and the signal line corresponding to said operation code (OP) is activated to "1" in the output of the detection circuit (OPDET) 160.

This signal line is used for generating data which generates the heading address of a microprogram corresponding to the instruction having the suboperation code (SOP). Namely, it is used for selecting the heading address data corresponding to operation code (OP) of the instruction having the suboperation code in the selector (SEL) 150 from a pair (a set) of output data (described later) of SUBOPCS 140.

Certain values of suboperation code (SOP) may require reading of different microprograms depending on the value of the operation code (OP) with which the suboperation code appears, but it is known in advance how many kinds of operation codes (OP) can correspond to a certain value of suboperation code (SOP).

Therefore, heading address data corresponding respectively to different operation codes (OP) is written at an address position on said SUBOPCS 140 which is indexed by the suboperation code (SOP) used as the address data (for the SUBOPCS). A set of output data of the SUBOPCS 140 means a plurality of heading address data entries written together as mentioned above. It is designated by the signal line extended from detection circuit (OPDET) 160 which member of a set should be selected, i.e. which of the plurality of heading address data entries should be selected.

The information on this signal line is coded by the encoding circuit (ENCDE) 170 and is used as a part of heading address data.

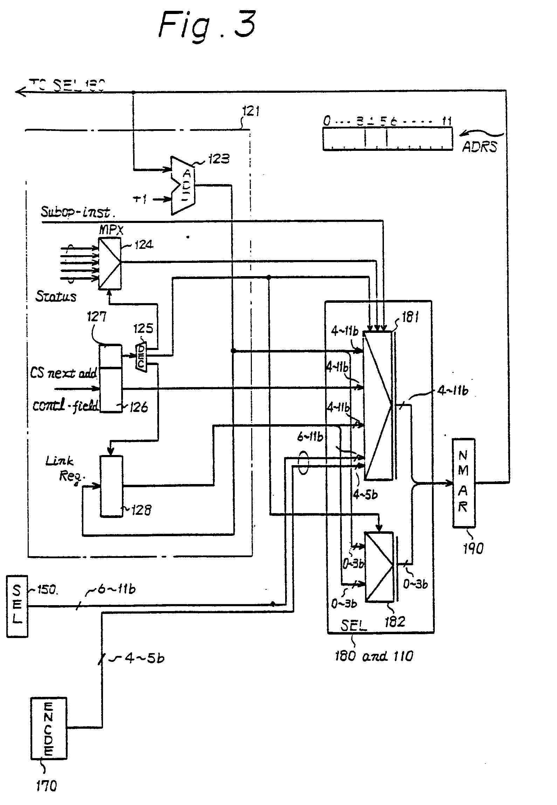

Fig. 3 shows detail of the address generating part corresponding to the next microaddress generating circuit 121, selector 180 and circuit 110 shown in Fig. 2. Reference numerals 121, 150, 170, 180, 110, 190 correspond to those in Fig. 2, respectively.

In processing where the heading address of a microprogram is extracted corresponding to an instruction having suboperation code (SOP) as mentioned above, a specified field of said instruction or a signal obtained as a result of decoding in the decoder 122 shown in Fig. 2 is set to logic "1", for example, as the suboperation instruction (subop-inst.) indicated in the upper part of Fig. 3. This logic "1" signal (subop-inst.) is then notified to the first multiplexer 181. Therefore, when the heading address of a microprogram is extracted corresponding to an instruction having a suboperation code, address data supplied from selector 150 and encoder 170 is selected and is set to NMAR 190.

The next microaddress generating circuit 121 comprises a microaddress +1 circuit 123, a selection circuit 124 which receives status data during processing and selects from that data, a decoder 125, a holding register 126 to which the next address control field in a microinstruction is set, a holding register 127 to which the control code (branching conditions, etc.) in the relevant field is set and a link register 128 which holds a return address whilst the relevant branching processing is completed during a branching process.

In selector 180, a first multiplier 181 which selects data in units of 8 bits and a second multiplexer 182 which selects data in units of 4 bits are provided.

When a microinstruction (for example an instruction P) read from the control memory 120 shown in Fig. 2 is not a particular instruction such as a branching instruction, the control code in the next address control field (CS next add. contl. field) in the relevant microinstruction is given an indication that the relevant instruction is not the branching instruction. It is also notified to the first multiplexer 181 and the second multiplexer 182 from the decoder 125 shown in Fig. 3. Accordingly, in this case, the content (as many as 12 bits of ADRS shown in the Figure) of next microaddress register (NMAR) 190 holding the microaddress of instruction P is sent to the microaddress +1 circuit 123 for incrementing by unity. Thereafter the first multiplexer 181 is caused to allow bits #4 to #11 to pass, while the second multiplexer 182 is caused to allow bits #0 to #3 bits to pass. Outputs of the two multiplexers are merged and set in the NMAR 190 in order to make access to a next instruction (P+1) as the new microaddress.

When a microinstruction (for example an instruction Q) read from the control memory 120 shown in Fig. 2 is a branching instruction, the branching address is described in the next address control field in the microinstruction Q and it is indicated in the control code. This condition is decoded by the decoder 125 and is notified to the first multiplexer 181 and the second multiplexer 182. When the branching instruction is a conditional branching instruction, this condition is notified to the selection circuit 124 shown in the Figure in order to select the conditions. Moreover, when the branching instruction requires a return to instruction Q+1 after the branching, such condition is notified to the link register 128. As a result, an output (address of instruction (Q+1)) of said microaddress +1 circuit 123 is set in the link register 128, and it is held as the return address for return to the initial routine after completion of branching processing. The selection circuit 124 judges whether the relevant branching is successful (takes place) or not successful (does not take place) based on status data during processing and then sends the result to the first multiplexer 181.

When the branching is successful, the first multiplexer 181 causes the branching address (as many as bits #4 to #11) which is the content of register 126 to pass. Meanwhile, the second multiplexer 182 causes bits #0 to #3 in the address of instruction (Q+1) to pass. The outputs of the two multiplexers are set as the branching microaddress to the NMAR 190 in a merged form. When branching is not successful due to the output from said selection circuit 124, output from the microaddress +1 circuit 123, namely the address of instruction (Q+1) is of course set to the NMAR 190.

When processing of the branching routine corresponding to the branching processing has completed, it is described in the control code in the next address control field of the microinstruction (for example an instruction R) read from the control memory 120 at that time. Accordingly, in this case, it is identified by the decoder 125 shown in Fig. 3 and it is then notified to the first multiplexer 181 and the second multiplexer 182. In this case, both multiplexers operate to set the content of the link register 128, namely the address of said instruction (Q+1), to the NMAR 190.

As described above, the address of a next microinstruction is determined while the control memory 120 shown in Fig. 2 is accessed. Next, it is assumed that the instruction having the suboperation code (SOP), such instructions being the concern of the present invention, is set to the instruction register (IR) 101 shown in Fig. 2. In this case, as is summarized by referring to Fig. 2, the control memory 120 is accessed by the operation code (OP) of relevant instruction and simultaneously, the relevant operation code (OP) is notified to the detection circuit 160. With this timing, the suboperation control memory (SUBOPCS) 140 is accessed by the suboperation code (SOP). Thereby, only one microninstruction (for example an instruction S) is read from the control memory 120 shown in Fig. 2. A plurality of different heading address data entries corresponding to the relevant suboperation code (SOP) are read from said SUBOPCS 140 and simultaneously only one heading address data entry (#6 to #11 bits) is extracted in the selector 150 based on the output from said detection circuit 160. Moreover, heading address data as many as #4 to #5 bits are output from the encoder (ENCDE) 170 on the basis of the output from the detection circuit 160. Both outputs are supplied together to the first multiplexer 181 as bits #4 to #11.

## Claims

1. A microprogram control system in a data processing unit operable to process, under microprogram control, instructions having operation codes (OP) and, in some instructions, suboperation codes (SOP), comprising

a first control memory (CS 120), storing microinstructions and accessible by the operation code (OP) of an instruction to be processed for generating an initial microinstruction of the microprogram associated with the instruction concerned, and

a second control memory (SUBOPCS 140), storing data for use in generating a heading address of a microprogram corresponding to the instruction to be processed when that instruction has a suboperation code (SOP), accessible by the suboperation code (SOP) of the instruction concerned, simultaneously with access to the first control memory (CS 120) by the operation code (OP) of the instruction concerned, to read out a heading address data set, for use in specifying a set of heading addresses relating respectively to microprograms to which the accessing suboperation code (SOP) could relate when associated with different operation codes (OP),

selection (150) means for selecting, from the heading address data set, the heading address data appropriate for the operation code with which the suboperation code is in fact associated in the instruction concerned,

and address generating means (110/170 to 190) operable to use the selected heading address data to provide the access address of the next microinstruction from the first control memory (CS 120), in response to a control signal (subop-Inst) from the initial microinstruction when the instruction to be processed has a suboperation code characterised in that

the selection means comprise a detection circuit (160) operable to convert the operation code (OP) of the instruction concerned into selection signals for a selector (150) that is arranged to receive the read out heading address data set from the second control memory (SUBOPCS 140) and to select therefrom, in dependence upon the operation code (OP), the appropriate heading address data,

and the address generating means comprise an encoder (170), operable to encode the selection signals from the detection circuit (160) for providing part of the access address of the first control memory, and a selector (180) operable to combine said part of the access address with the selected heading address data from the second control memory (SUBOPCS 140) to provide said access address of the next microinstruction.

2. A microprogram control system as claimed in claim 1, wherein the address generating means is operable, when the instruction to be processed does not have a suboperation code (SOP), when the control signal (subop.-inst.) is not provided, to generate an address for accessing the first control memory which address is one of the following: (a) an address specified in a next address field of the current microinstruction; (b) an address provided by incrementing the address of a previously executed microinstruction; (c) a link address, held in a link register (128) when a branch microinstruction has been executed.

## Patentansprüche

1. Mikroprogrammsteuersystem in einer Datenverarbeitungseinheit, das betreibbar ist, um, unter Steuerung durch das Mikroprogramm, Befehle zu verarbeiten, die Operationscode (OP) und, in einigen Befehlen, Suboperationscode (SOP) haben, mit

einem ersten Steuerspeicher (CS 120), der Mikrobefehle speichert und durch den Operationscode (OP) eines zu verarbeitenden Befehls zugreifbar ist und betreibbar ist, um einen anfänglichen Mikrobefehl des Mikroprogramms, welches dem Betreffenden Befehl zugeordnet ist, zu erzeugen, und

einem zweiten Steuerspeicher (SUBOPCS 140), der Daten speichert, zur Verwendung bei der Erzeugung einer Kopfadresse eines Mikroprogramms, welches dem zu verarbeitenden Befehl entspricht, wenn jener Befehl einen Suboperationscode (SOP) hat, der durch den Suboperationscode (SOP) des betreffenden Befehls zugreifbar ist, gleichzeitig mit dem Zugriff zu dem ersten Steuerspeicher (CS 120) durch den Operationscode (OP) des betreffenden Befehls, um den Kopfadreßdatensatz auszulesen, zur Verwendung zur Spezifizierung eines Satzes von Kopfadressen, welche sich jeweils auf Mikroprogramme beziehen, auf welche sich der zugreifende Suboperationscode (SOP) beziehen könnte, wenn er mit verschiedenen Operationscoden (SOP) assoziiert wird,

Auswahl-(150)-Einrichtungen zum Auswählen, aus dem Kopfadreßdatensatz, der Kopfadreßdaten, die für den Operationscode geeignet sind, welchem der Operationscode in dem Betreffenden Befehl tatsächlich zugeordnet ist,

und Adreßgeneratoreinrichtungen (110, 170 bis 190), die betreibbar sind, um die ausgewählten Kopfadreßdaten zu verwenden, um die Zugriffsadresse des nächsten Mikrobefehls von dem ersten Steuerspeicher (CS 120) zu liefern, in Abhängigkeit von einem Steuersignal (SUBOP-Inst) von dem anfänglichen Mikrobefehl, wenn der zu verarbeitende Befehl einen Suboperationscode hat,

dadurch gekennzeichnet, daß die Auswahleinrichtung eine Detektorschaltung (160) umfaßt, die betreibbar ist, um den Operationscode (OP) des betreffenden Befehls in Auswahlsignale für einen Wähler (150) zu konvertieren, der angeordnet ist, um den ausgelesenen Kopfadreßdatensatz von dem zweiten Steuerspeicher (SUBOPCS 140) zu empfangen und daraus, in Abhängigkeit von dem Operationscode (OP), die geeigneten Kopfadreßdaten auszuwählen,

und die Adreßgeneratoreinrichtung einen Codierer (170) umfaßt, der betreibbar ist, um Auswahlsignale von der Detektorschaltung (160) zu codieren, um einen Teil der Zugriffsadresse für den ersten Steuerspeicher zu liefern, und ein Selektor (180) betreibbar ist, um den genannten Teil der Zugriffsadresse mit den ausgewählten Kopfadreßdaten von dem zweiten Steuerspeicher (SUBOPCS 140) zu kombinieren, um die genannte Zugriffsadresse für den nächsten Mikrobefehl zu liefern.

2. Mikroprogrammsteuersystem nach Anspruch 1, bei dem die Adreßgeneratoreinrichtung betreibbar ist, wenn der zu verarbeitende Befehl keinen Suboperationscode (SOP) hat, wenn das Steuersignal (subop-inst.) nicht vorgesehen ist, um eine Adresse zum Zugriff zu dem ersten Steuerspeicher zu erzeugen, welche Adresse eine der folgenden ist: (a) eine Adresse, die in einem nächsten Adreßfeld des laufenden Mikrobefehls spezifiziert ist; (b) eine Adresse, die durch Erhöhung der Adresse des zuvor ausgeführten Mikrobefehls erzeugt wird; (c) eine Verbindungsadresse, die in einem Verbindungsregister (128) gehalten wird, wenn ein Zweig-Mikrobefehl ausgeführt worden ist.

**Revendications**

1. Système de commande microgrammé dans une unité de traitement de données pouvant fonctionner pour traiter, sous commande microprogrammée, des instructions comportant des codes opération (OP) et, dans certaines instructions, des codes de sous-opération (SOP), comprenant

un première mémoire de commande (CS 120), mémorisant des micro-instructions et accessible par le code opération (OP) d'une instruction à traiter pour générer une micro-instruction initiale du microprogramme associé à l'instruction concernée, et

une deuxième mémoire de commande (SUBOPCS 140), mémorisant des données destinées à générer une adresse en-tête d'un microprogramme correspondant à l'instruction à traiter quand cette instruction comporte un code de sous-opération (SOP), accessible par le code de sous-opération (SOP) de l'instruction concernée, simultanément avec l'accès à la première mémoire de commande (CS 120) par le code opération (OP) de l'instruction concernée, pour lire un groupe de données d'adresse en-tête, destiné à spécifier un groupe d'adresses en-tête relatives respectivement aux microprogrammes auxquels peut se rapporter le code de sous-opération d'accès (SOP) quand il est associé à différents codes opération (OP),

un moyen de sélection (150) pour sélectionner, à partir du groupe de données d'adresse en-tête, les données d'adresse en-tête appropriées pour le code opération auquel est associé en réalité le code de sous-opération dans l'instruction concernée, et

un moyen générateur d'adresse (110, 170 à 190) pouvant être mis en fonctionnement pour utiliser les données d'adresse en-tête sélectionnées afin de fournir l'adresse d'accès de la micro-instruction suivante provenant de la première mémoire de commande (CS 120), en réponse à un signal de commande (inst. subop) provenant de la micro-instruction initiale quand l'instruction à traiter comporte un code de sous-opération,

caractérisé en ce que

le moyen de sélection comprend un circuit de détection (160) pouvant être mis en fonctionnement pour convertir le code opération (OP) de l'instruction concernée en signaux de sélection pour un sélecteur (150) qui est agencé pour recevoir le groupe de données d'adresse en-tête lu dans la deuxième mémoire de commande (SUBOPCS 140) et pour sélectionner à partir de celui-ci, selon le code opération (OP), les données d'adresse en-tête appropriées,

et le moyen générateur d'adresse comprend un codeur (170), pouvant être mis en fonctionnement pour coder les signaux de sélection provenant du circuit de détection (160) afin de fournir une partie de l'adresse d'accès de la première mémoire de commande, et un sélecteur (180) pouvant être mis en fonctionnement pour combiner la partie de l'adresse d'accès avec les données d'adresse en-tête sélectionnées provenant de la deuxième mémoire de commande (SUBOPCS 140) pour fournir l'adresse d'accès de la micro-instruction suivante.

2. Système de commande microprogrammé selon la revendication 1, dans lequel le moyen générateur d'adresse peut être mis en fonctionnement, quand l'instruction à traiter ne comporte pas de code de sous-opération (SOP), quand le signal de commande (inst. subop) n'est pas fourni pour engendrer une adresse pour avoir accès à la première mémoire de commande, cette addresse étant une des suivantes: (a) une adresse spécifiée dans une zone d'adresse suivante de la micro-instruction présente; (b) une adresse fournie en incrémentant l'adresse d'une micro-instruction exécutée précédemment; (c) une adresse de liaison, maintenue dans une registre de liaison (128) quand une micro-instruction de branchement a été exécutée.

Fig. 1

Fig. 2

to Each Control Point

Fig. 3

## Fig. 3